(19) **Europäisches Patentamt**

**European Patent Office**

**Office européen des brevets**

(11) **EP 1 287 241 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(21) Anmeldenummer: **01949357.6**

(22) Anmeldetag: **25.05.2001**

(51) Int Cl.$^7$: **F01N 3/08**, F01N 3/28

(86) Internationale Anmeldenummer:
**PCT/EP2001/005998**

(87) Internationale Veröffentlichungsnummer:
**WO 2001/092693 (06.12.2001 Gazette 2001/49)**

(54) **KLEINVOLUMIGER ADSORBER**

LOW-VOLUME ADSORBER

STRUCTURE ADSORBANTE DE PETIT VOLUME

(84) Benannte Vertragsstaaten:
**DE FR GB**

(30) Priorität: **02.06.2000 DE 10027401**

(43) Veröffentlichungstag der Anmeldung:
**05.03.2003 Patentblatt 2003/10**

(73) Patentinhaber: **Emitec Gesellschaft für Emissionstechnologie mbH**
**53797 Lohmar (DE)**

(72) Erfinder:
• **BRÜCK, Rolf**
 **51429 Bergisch Gladbach (DE)**
• **HIRTH, Peter**
 **51107 Köln (DE)**

(74) Vertreter: **Kahlhöfer, Hermann et al**
**Patentanwälte**
**Kahlhöfer Neumann**
**Herzog Fiesser**
**Karlstrasse 76**
**40210 Düsseldorf (DE)**

(56) Entgegenhaltungen:
 **EP-A- 0 593 898**  **DE-A- 19 814 132**
 **US-A- 3 891 575**

EP 1 287 241 B1

**Beschreibung**

Die Erfindung bezieht sich auf eine Vorrichtung zum Adsorbieren von mindestens einer Komponente eines Abgases mit einem Adsorber, der für ein Abgas durchströmbar ist. Derartige Adsorber werden insbesondere in einem Abgassystem einer Verbrennungskraftmaschine eines Fahrzeuges eingesetzt.

Zur Erfüllung der weltweit schärfer werdenden Abgasgrenzwerte werden derzeit unterschiedliche Konzepte zur Emissionsbegrenzung verfolgt. Dabei steht insbesondere das Emissionsverhalten der Abgasanlage nach dem Kaltstart der Verbrennungskraftmaschine im Vordergrund. Eine Bewertung des Emissionsverhaltens nach Kaltstart erfolgt aufgrund unterschiedlicher Fahrzyklen, wie beispielsweise anhand des US-FTP 75-Testzyklus. Die Fahrkurve des FTP 75- Testzyklus setzt sich aus drei Geschwindigkeitsverläufen zusammen, die in den USA auf den Straßen von Los Angeles während des morgendlichen Berufsverkehrs gemessen wurden. Der FTP 75-Testzyklus ist beispielsweise im "Kraftfahrtechnischen Taschenbuch" der Robert Bosch GmbH (22. Auflage, Düsseldorf: VDI-Verlag, 1995) beschrieben.

Zur Reinigung des Abgases werden Katalysatoren eingesetzt. Die Katalysatoren weisen eine katalytisch aktive Oberfläche auf, die ab einer bestimmten Temperatur (ca. 250°C) eine chemische Umsetzung der Schafstoffe im Abgas (Kohlenmonoxid, Kohlenwasserstoff, Stickoxid) bewirkt. Der Zeitraum bis zum Erreichen dieser Anspringtemperatur kann beispielsweise durch den Einsatz eines elektrisch beheizbaren Katalysators verkürzt werden. Die Verschärfung der Emissionsgrenzen erfordert jedoch, daß auch direkt nach dem Kaltstart nur eine sehr geringe Kohlenwasserstoff-Emission erfolgt. Hierfür eignet sich der Einsatz eines Adsorbers, der die Aufgabe übernimmt, im Kaltstart anfallende KohlenwasserstoffMoleküle zu speichern.

Bekannt sind Adsorber mit Zeolith als Molekularsieb. Zeolithe sind mikroporöse Alumosilikate (Aluminium- Silicium-Kristalle) mit der Eigenschaft, bestimmte Moleküle aufnehmen zu können. Die Zeolithstruktur besteht aus einem Tetraedergerüst mit Kanälen und/oder Hohlräumen, deren Geometrie einen Zeolithen charakterisiert. Während der Kaltstartphase des Fahrbetriebes werden die Kohlenwasserstoffe in der Porenstruktur des Adsorbers aufgenommen (Adsorbtionsphase). Die Stärke der Anbindung der Kohlenwasserstoffe an den Adsorber hängt von der Art der Kohlenwasserstoffe und dem Aufbau des Speichermediums ab. Mit zunehmender Betriebsdauer und steigender Abgastemperatur werden die in dem Adsorber gespeicherten Kohlenwasserstoffe desorbiert (Desorptionsphase). Dies geschieht bei Temperaturen zwischen 100 bis 200°C.

Bekannt ist ebenfalls, in einem Abgassystem einen Adsorber anzuordnen, dem stromabwärts ein Katalysator nachgeschaltet ist. Der Adsorber stellt eine thermische Masse dar, die dem Abgas Wärme entzieht. Demzufolge weist das Abgas beim Durchströmen des nachgeschalteten Katalysators eine geringere thermische Energie auf, wodurch das Aufheizen des Katalysators und somit auch das Erreichen der Anspringtemperatur verlangsamt wird.

Aufgabe der vorliegenden Erfindung ist es, einen Adsorber anzugeben, welcher die Kohlenwasserstoff-Emission in der Kaltstartphase deutlich reduziert und den Aufheizvorgang eines nachgeschalteten Katalysators nur sehr gering beeinflußt.

Diese Aufgabe wird erfindungsgemäß durch eine Vorrichtung zum Adsorbieren von mindestens einer Komponente eines Abgases gemäß den Merkmalen des Anspruchs 1 gelöst. Vorteilhafte Weiterbildungen sind in den abhängigen Ansprüchen angegeben.

Die erfindungsgemäße Vorrichtung zum Adsorbieren von mindestens einer Komponente eines Abgases weist einen Adsorber auf, der für ein Abgas durchströmbar ist Diese Vorrichtung eignet sich für ein Abgassystem einer Verbrennungskraftmaschine eines Fahrzenges. Der Adsorber läßt sich anhand seines Volumens beschreiben, wobei damit nachfolgend das Volumen des Adsorbers einschließlich der Hohlräume und/oder Kanäle verstanden wird.

Erfindungsgemäß wird vorgeschlagen, daß der Betrag des Volumens des Adsorbers in Abhängigkeit der mittleren Temperatur und dem mittleren Massenstrom des ihn durchströmenden Abgases bestimmt wird, wobei der Betrag des Volumens folgender Gleichung entspricht:

$$V \leq a + b{\cdot}t + \frac{c}{m} + d{\cdot}t^2 + \frac{e}{m^2} + \frac{f{\cdot}t}{m} + g{\cdot}t^3 + \frac{h}{m^3} + \frac{i{\cdot}t}{m^2} + \frac{k{\cdot}t^2}{m}.$$

Die Koeffizienten a bis k haben folgende Werte:

$$a = 0.1660393, \qquad b = 0.0033635701,$$

$$c = -1.7023186, \qquad d = 6.5277225{\cdot}10^{-6},$$

$$e = 195.657, \qquad f = -0.1373556,$$

$$g = -9.0343024 \cdot 10^{-9}, \qquad h = -1273.9098,$$

$$i = 1.0172767 \qquad \text{und } k = -1.442512 \cdot 10^{-5},$$

wobei $V > 0$ ist.

Diese Gleichung ist das Ergebnis einer umfangreichen Untersuchung des Adsorbtionsverhaltens verscbiedener Adsorber. Dabei wurden die Rohemissionen (das Abgas) unterschiedlicher Verbrennungskraftmaschinen nachgebildet, welche diese Verbrennungskraftmaschinen in den ersten 100 Sekunden des US-FTP 75-Fahrzyklus erzeugen würden. Dabei wurde festgestellt, daß das Adsorbtions- und Desorptionsverhalten des Adsorbers im wesentlichen von der Temperatur sowie dem Massenstrom des Abgases abhängig ist.

Die Temperatur des Abgases nimmt im allgemeinen mit zunehmender Entfernung von der Verbrennungskraftmaschine ab, da es überwiegend in einem kühleren Leitungssystem geführt wird und dabei Wärme abgibt. Ein solches Leitungssystem kann allerdings Komponenten zur katalytischen Umsetzung von Schadstoffen aufweisen, wobei die katalytische Reaktion exotherm abläuft und demzufolge die Temperatur des Abgases stromabwärts eines Katalysators höher sein kann als stromaufwärts. Bei den Untersuchungen wurden unterschiedliche Temperaturverläufe des Abgases vor dem Adsorber über die ersten 100 Sekunden des FTP-Tests gemittelt ($[t] = \,^{\circ}C$; Grad Celsius).

Eine weitere wichtige Kenngröße bei der Bestimmung des geeigneten Adsorbervolumens ist der den Adsorber durchströmende Massenstrom des Abgases ($[m] = $ kg/h; Kilogramm pro Stunde). Der Massenstrom charakterisiert dabei beispielsweise die Heiz- bzw. Kühlwirkung des Abgases oder die Menge bzw. Konzentration der Schadstoffe. Die Größe und Zusammensetzung des Massenstroms selbst kann beispielsweise mit einer Motorsteuerung (z.B. über den Zündwinkel oder die Leerlaufdrehzahl des Motors) oder eine Sekundärlufteinspeisung beeinflußt werden. Der erforderliche Massenstrom, insbesondere in einer Leerlaufphase, ist weiterhin von der konstruktiven Gestaltung des Motors abhängig, da beispielsweise unterschiedliche Verluste aufgrund von Reibung im Motor (z. B. an den Ventilen, Kolben oder Lagern) durch die konstruktive Gestaltung bedingt werden. Mit Hilfe des Massenstromes des Abgases können diese verschiedenen Faktoren auf einfache Weise bei der Auslegung des Adsorbervolumens berücksichtigt werden. Der mittlere Massenstrom bezieht sich dabei ebenfalls auf das Emissionsverhalten einer Verbrennungskraftmaschine während der ersten 100 Sekunden des FTP-Tests.

Die Ergebnisse dieser Untersuchung zeigen überraschenderweise, daß ein Adsorber im Gegensatz zu der allgemeinen Ansicht mit einem relativ kleinen Volumen ausreichend ist. Dies ist unter anderem darauf zurückzuführen, daß bei der Bestimmung der erfindungsgemäßen Formel zur Bestimmung des Adsorbervolumens neben der Speicherkapazität auch die thermische Masse des Adsorbers und somit das Aufheizverhalten eines stromabwärts angeordneten Katalysators berücksichtigt wurde. Ein verringertes Volumen stellt eine kleinere thermische Masse dar, wodurch dem Abgas weniger Wärme entzogen wird.

Erfindungsgemäß weist der Adsorber eine Beschichtung mit einer Zeolithstruktur auf, wobei die Beschichtung insbesondere mit Alumosilikaten (Aluminium-Silicium-Kristallen) ausgeführt ist. Die geometrischen Eigenschaften der Zeolithstruktur können in einfacher Weise auf die Größe und Art der Kohlenwasserstoffmoleküle angepaßt werden. Die Zeolithstruktur hat den Vorteil, daß eine Vielzahl von Kanälen und/oder Hohlräumen zur Verfügung gestellt werden, wobei eine relativ starke Anbindung der zu speichernden Kohlenwasserstoffmoleküle verwirklicht wird.

Gemäß einer weiteren Ausführungsform weist der Adsorber Blechlagen auf, die zumindest teilweise so strukturiert sind, daß diese für ein Abgas durchströmbar sind. Ein Adsorber mit Blechlagen hat den Vorteil, daß dieser bei gleichem Volumen eine größere Oberfläche und einen geringeren Druckvelust gegenüber beispielsweise einem Adsorber aus Keramik aufweist.

Gemäß einer weiteren Ausführungsform sind die Blechlagen mit Blechen ausgeführt, welche eine Dicke von 0,02 mm bis 0,08 mm haben. Diese relativ dünnen Bleche gewährleisten eine geringe Wärmekapazität des Adsorbers und reduzieren derart nicht die thermische Energie, die dem Abgas entzogen wird.

Gemäß einer noch weiteren Ausführungsform weist der Adsorber Kanäle auf, die von dem Abgas in einer Strömungsrichtung durchströmbar sind, wobei die Anzahl der Kanäle bei einer Querschnittsfläche quer zur Strömungsrichtung mindestens 600 cpsi (cells per square inch) beträgt. Eine hohe Anzahl an Kanälen stellt eine große Oberfläche zur Verfügung, wodurch beispielsweise mit einer Zeolithbeschichtung eine hohe Speicherkapazität des Adsorbers gewährleistet ist.

Die beiliegenden Zeichnungen zeigen schematisch:

Fig. 1   eine erfindungsgemäße Vorrichtung zum Adsorbieren von mindestens einer Komponente eines Abgases mit einem in einem Abgassystem einer Verbrennungskraftmaschine eines Fahrzeuges eingesetzten Adsorber; und

Fig. 2    der Adsorber nach Fig. 1 in einer perspektivischen, stark vergrößerten Ansicht.

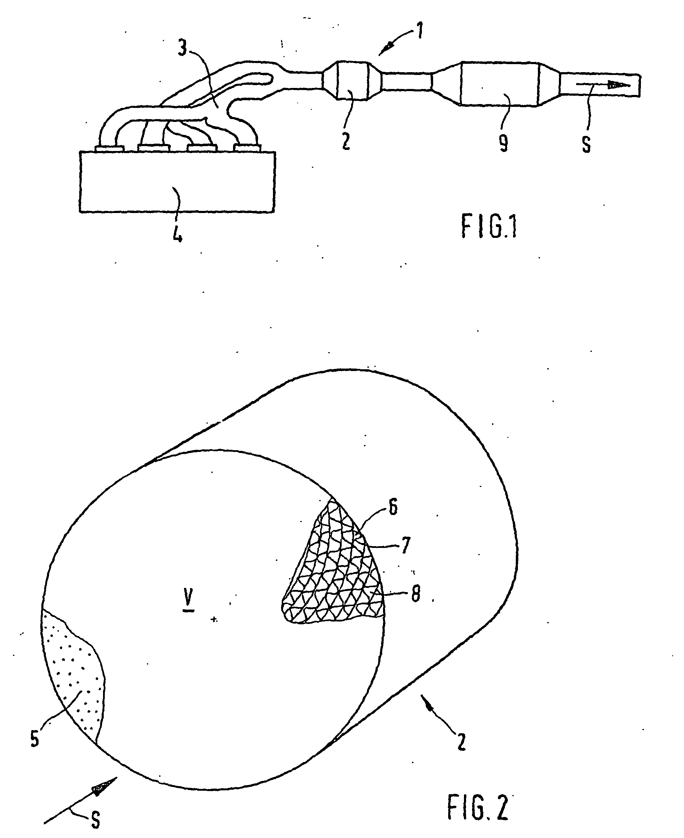

Fig. 1 zeigt eine erfindungsgemäße Vorrichtung 1 zum Adsorbieren von mindestens einer Komponente eines Abgases mit einem in einem Abgassystem 3 einer Verbrennungskraftmaschine 4 eines (nicht dargestellten) Kraftfahrzeuges eingesetzten Adsorber 2, wobei stromabwärts des Abgases dem Adsorber 2 ein Katalysator 9 nachgeschaltet ist. Die Strömungsrichtung S des Abgases ist durch einen Pfeil entsprechend gekennzeichnet.

Fig. 2 zeigt den Adsorber 2 nach Fig. 1 in einer perspektivischen, stark vergrößerten Ansicht. Der Adsorber 2 lässt sich anhand seines Volumens V beschreiben. Dieses kann durch eine Beschichtung 5 mit einer Zeolithstruktur und/oder durch zumindest teilweise strukturierte Bleche 6, 7, beispielsweise glatte 6 und gewellte 7 Blechlagen, welche für das Abgas durchströmbare Kanäle 8 bilden, ausgebildet werden.

Ein Adsorber 2 mit seinem erfindungsgemäß beanspruchten Volumen V ist in Abhängigkeit der Eigenschaften des ihn durchströmenden Abgases in vorteilhafter Weise besonders kompakt ausgeführt und verbessert insbesondere das Kaltstartverhalten eines stromabwärts angeordneten Katalysators 9.

**Bezugszeichenliste**

1    Vorrichtung zum Adsorbieren
2    Adsorber
3    Abgassystem
4    Verbrennungskraftmaschine
5    Beschichtung
6    glatte Blechlage
7    gewellte Blechlage
8    Kanal
9    Katalysator

S    Strömungsrichtung
V    Volumen des Adsorbers 2

**Patentansprüche**

1.    Vorrichtung (1) zum Adsorbieren von mindestens einer Komponente eines Abgases in einem Abgassystem (3) einer Verbrennungskraftmaschine (4) eines Fahrzeuges, mit einem Adsorber (2) für Kohlenwasserstoffe mit einem Volumen (V), der für ein Abgas mit einer Temperatur und einem Massenstrom durchströmbar ist, wobei der Adsorber (2) eine Beschichtung (5) mit einer Zeolithstruktur aufweist, **dadurch gekennzeichnet, daß** der Betrag des Volumens (V) folgender Gleichung entspricht:

$$V \leq a + b{\cdot}t + \frac{c}{m} + d{\cdot}t^2 + \frac{e}{m^2} + \frac{f{\cdot}t}{m} + g{\cdot}t^3 + \frac{h}{m^3} + \frac{i{\cdot}t}{m^2} + \frac{k{\cdot}t^2}{m},$$

wobei V := Volumen des Adsorbers [1],

t := mittlere Temperatur des Abgases [°C]

m := mittlerer Massenstrom des Abgases [kg/h],

a = 0.1660393,        b = 0.0033635701,

c = -1.7023186,        d = 6.5277225·10$^{-6}$,

e = 195.657,        f = -0.1373556,

g = -9.0343024·10⁻⁹,    h = -1273.9098,

i = 1.0172767    und k = -1.442512·10⁻⁵

und wobei V>0 ist.

2.  Vorrichtung (1) nach Anspruch 1, **dadurch gekennzeichnet, daß** der Adsorber (2) Blechlagen (6; 7) aufweist, die zumindest teilweise so strukturiert sind, daß diese für das Abgas durchströmbar sind.

3.  Vorrichtung (1) nach Anspruch 2, **dadurch gekennzeichnet, daß** die Blechlagen (6; 7) mit Blechen (6; 7) ausgeführt sind, welche eine Dicke von 0.02 mm bis 0.08 mm haben.

4.  Vorrichtung (1) nach einem der Ansprüche 1 bis 3, **dadurch gekennzeichnet, daß** der Adsorber (2) Kanäle (8) aufweist, die von dem Abgas in einer Strömungsrichtung (S) durchströmbar sind, wobei die Anzahl der Kanäle (8) pro einer Querschnittsfläche quer zur Strömungsrichtung (S) mindestens 600 cpsi ist.

**Claims**

1.  A device (1) for adsorbing at least one component of an exhaust gas in an exhaust system (3) of an internal-combustion engine (4) of a vehicle, having an adsorber (2) for adsorbing hydrocarbons with a volume (V) through which an exhaust gas can flow at a temperature and mass flow rate, said adsorber (2) having a coating (5) with a zeolite structure, **characterized in that** the absolute value of the volume (V) corresponds to the following equation:

$$V \leq a + b\cdot t + \frac{c}{m} + d\cdot t^2 + \frac{e}{m^2} + \frac{f\cdot t}{m} + g\cdot t^3 + \frac{h}{m^3} + \frac{i\cdot t}{m^2} + \frac{k\cdot t^2}{m},$$

where V := Volume of the adsorber [1],
t := mean temperature of the exhaust gas [°C],
m := mean mass flow rate of the exhaust gas [kg/h],
a = 0.1660393,    b = 0.0033635701,
c = -1.7023186,    d = 6.5277225·10⁻⁶,
e = 195.657,    f = -0.1373556,
g = -9.0343024·10⁻⁹,    h = -1273.9098,
i = 1.0172767    and k = -1.442512·10⁻⁵

and wherein V>0 is fulfilled.

2.  The device (1) as claimed in claim 1, **characterized in that** the adsorber (2) has sheet-metal layers (6; 7) which are at least partially structured in such a way that the exhaust gas can flow through them.

3.  The device (1) as claimed in claim 2, **characterized in that** the sheet-metal layers (6; 7) are designed with metal sheets (6; 7) which have a thickness of 0.02 mm to 0.08 mm.

4.  The device (1) as claimed in one of claims 1 to 3, **characterized in that** the adsorber (2) has channels (8) through which the exhaust gas can flow in a direction of flow (S), the number of channels (8) per unit cross-sectional area transversely to the direction of flow (S) being at least 600 cpsi.

**Revendications**

1.  Dispositif (1) pour adsorber au moins un composant d'un gaz d'échappement dans un système de gaz d'échappement (3) d'une machine à combustion interne (4) d'un véhicule, avec un adsorbant (2) pour des hydrocarbures avec un volume (V), adsorbant, à travers lequel un gaz d'échappement peut s'écouler à une température et un flux de masse, l'adsorbant (2) étant doté d'un revêtement (5) avec une structure de zéolithe, **caractérisé en ce que** la valeur absolue du volume (V) correspond à l'équation suivante :

$$V \leq a + b \cdot t + \frac{c}{m} + d \cdot t^2 + \frac{e}{m^2} + \frac{f \cdot t}{m} + g \cdot t^3 + \frac{h}{m^3} + \frac{i \cdot t}{m^2} + \frac{k \cdot t^2}{m},$$

où V := volume de l'adsorbant [1],
t := température moyenne du gaz d'échappement [°C]
m := flux de masse moyen du gaz d'échappement [kg/h]
a = 0,1660393,        b = 0,0033635701,
c = -1,7023186,        d = $6,5277225 \cdot 10^{-6}$,
e = 195,657,        f = 0,1373556,
g = $-9,0343024 \cdot 10^{-9}$,        h = -1273,9098
i = 1,0172767        et        k = $-1,442512 \cdot 10^{-5}$

et où V>0.

2. Dispositif (1) selon la revendication 1, **caractérisé en ce que** l'adsorbant (2) a des couches de tôle (6 ; 7) qui sont au moins partiellement structurées de manière telle que le gaz d'échappement peut les traverser.

3. Dispositif (1) selon la revendication 2, **caractérisé en ce que** les couches de tôle (6 ; 7) sont réalisées avec des tôles (6 ; 7) qui ont une épaisseur de 0,02 mm à 0,08 mm.

4. Dispositif (1) selon l'une des revendications 1 à 3, **caractérisé en ce que** l'adsorbant (2) a des canaux (8) pouvant être traversés dans une direction d'écoulement (S), le nombre des canaux (8) par une surface de section transversale transversalement à la direction d'écoulement (S) étant au moins 600 cpsi.

FIG.1

FIG.2

7